# EUROPEAN PATENT SPECIFICATION

(11) **EP 3 070 005 B1**
(45) Date of publication and mention of the grant of the patent: **25.10.2017**
(21) Application number: 16160979.7
(22) Date of filing: 17.03.2016
(51) Int. Cl.: B65B 19/02, B65B 19/22, B65B 41/06, B65G 37/00

(54) **WRAPPING METHOD AND PACKER MACHINE TO MANUFACTURE PACKETS OF TOBACCO ARTICLES, EACH CONTAINING TWO DISTINCT GROUPS OF TOBACCO ARTICLES**
EINWICKLUNGSVERFAHREN UND PACKERMASCHINE ZUR HERSTELLUNG VON PAKETEN MIT TABAKARTIKELN, WOBEI JEDE ZWEI VERSCHIEDENE GRUPPEN VON TABAKARTIKELN ENTHÄLT
PROCÉDÉ ET MACHINE D'EMBALLAGE POUR FABRIQUER DES PAQUETS D'ARTICLES DE TABAC, CONTENANT CHACUN DEUX GROUPES DISTINCTS D'ARTICLES DE TABAC

(30) Priority: 18.03.2015 IT BO20150130
(43) Date of publication of application: 21.09.2016
(73) Proprietor: G.D SOCIETA' PER AZIONI, 40133 Bologna (IT)
(72) Inventor: SPIRITO, Gilberto, 40133 Bologna (IT); FEDERICI, Luca, 40135 Bologna (IT)
(74) Representative: Maccagnan, Matteo

(56) References cited:
- WO-A1-2013/171540
- DE-A1-102008 007 901
- DE-A1-102014 000 398
- GB-A- 2 017 039

## Description

### TECHNICAL FIELD

The present invention relates to a wrapping method and to a packer machine to manufacture packets of tobacco articles, each containing two distinct groups of tobacco articles.

The present invention finds advantageous application in manufacturing a packet of cigarettes containing two distinct groups of cigarettes, to which the following description will make explicit reference without this implying any loss of generality.

### PRIOR ART

Since several years a packet of cigarettes commercially referred as "TWIN" has been known which comprises an outer rigid container housing inside two identical groups of cigarettes (i.e. "*twin*", hence the commercial term of the packet of cigarettes), which are arranged one beside the other and are wound in corresponding wrappers. The patent US4258528A1 describes part of a packer machine for manufacturing a "TWIN" packet of cigarettes; said packer machine comprises two straight wrapping lines, which are identical and arranged one beside the other to manufacture in parallel two inner wraps (each formed by a group of cigarettes wrapped in a wrapper of metallized paper) which are subsequently coupled to a common blank which is folded around the two wraps to form the corresponding outer rigid container. Each straight wrapping line originates at a hopper, from the mouths of which, the groups of cigarettes are extracted and ending at a wrapping wheel provided with pockets for housing the blanks.

In the packer machine described in patent US4258528A1, the two straight wrapping lines are necessarily arranged at a certain distance one from the other, since it is necessary that between the two straight wrapping lines a sufficient space to feed and fold the wrappers is provided; whereas in the pocket of the wrapping wheel the two inner wraps are fed in mutual contact (i.e. in the same position that the two inner wraps assume in the finished packet of cigarettes). Consequently, in the vicinity of the wrapping wheel it is necessary to transversely shift the two inner wraps in order to move the two inner wraps closer, until bringing them in mutual contact by means of corresponding translating devices. However, said translating devices are rather complex and bulky and, above all, by operating at a high processing speed, the cigarettes undergo relevant transverse accelerations which may also lead to the damage of the cigarettes themselves (in particular, said transverse acceleration can contribute to the emptying of the tips, i.e. loss of tobacco from the free end of the cigarettes).

The patent application WO2013171540A1 constitutes the closest prior art and describes a wrapping method and a packer machine according to the pre-characterizing part of the independent claims 1 and 16.

### DESCRIPTION OF THE INVENTION

The object of the present invention is to provide a wrapping method and a packer machine for manufacturing packets of tobacco articles each containing two distinct groups of tobacco articles, which wrapping method and packer machine are free from the drawbacks described above and are, at the same time, easy and inexpensive to manufacture.

According to the present invention, are provided a wrapping method and a packer machine for manufacturing packets of tobacco articles each containing two distinct groups of tobacco articles, as claimed in the attached claims.

### BRIEF DESCRIPTION OF THE DRAWINGS

The present invention will now be described with reference to the accompanying drawings, which illustrate some non-limiting examples of embodiments, wherein:
- Figure 1 is a front perspective view and in a closed configuration of a "TWIN" packet of cigarettes;
- Figure 2 is a front perspective view and in an open configuration of the "TWIN" packet of cigarettes of Figure 1;
- Figure 3 is a perspective view of an inner wrap held in the "TWIN" packet of cigarettes of Figure 1;
- Figure 4 is a perspective view of a group of cigarettes held in the inner wrap of Figure 3;
- Figure 5 is a schematic and perspective view of part of a packer machine which produces the "TWIN" packet of cigarettes of Figure 1 and is manufactured according to the present invention;
- Figure 6 is a view in enlarged scale of a detail of Figure 5;
- Figure 7 is a schematic front view, with parts removed for clarity, of two conveyors of the packer machine of Figure 5;
- Figure 8 is a schematic perspective view and with parts removed for clarity, of a different embodiment of two conveyors of the packer machine of Figure 5; and
- Figure 9 is a schematic front view, with parts removed for clarity, of the two conveyors of Figure 8.

### PREFERRED EMBODIMENTS OF THE INVENTION

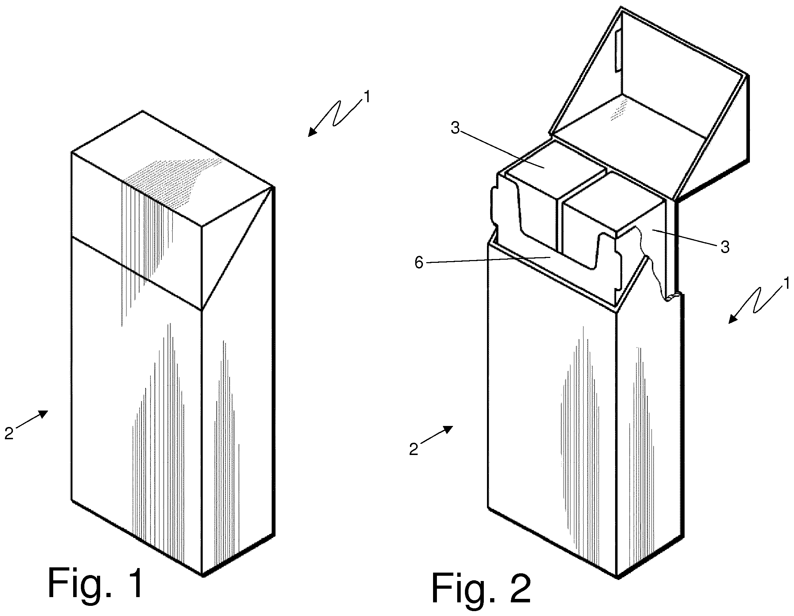

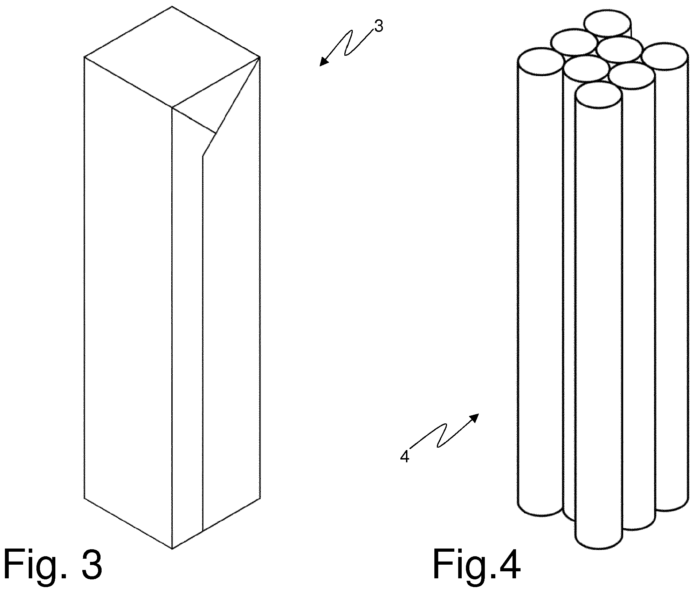

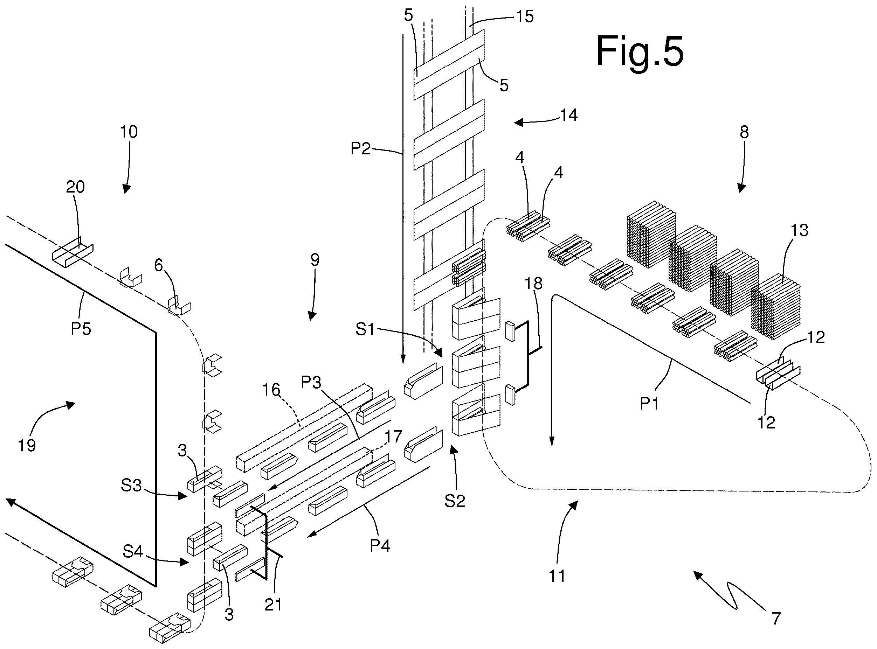

In Figures 1 and 2, number 1 denotes as a whole a rigid packet of cigarettes comprising a rigid outer container 2 provided with a hinged lid and a pair of inner wraps 3, which are arranged one beside the other and are housed in the outer container 2. Each inner wrap 3 (better illustrated in Figure 3) encloses a parallelepiped-shaped group 4 of cigarettes (illustrated in Figure 4) and has at the top a removable tear-off portion that is removed to allow access to the cigarettes. Each inner wrap 3 is manufactured by folding, in a known manner, a rectangular-shaped wrapper 5 (illustrated in Figure 5) around the group 4 of cigarettes. According to a preferred embodiment, the outer rigid container 2 comprises a collar 6, which embraces both inner wraps 3, is connected (by gluing) in the outer container 2 to partly project outwards from an open top end of the outer container 2 and engage a corresponding inner surface of the lid when the lid is arranged in the aforementioned closed position.

In figure 5, number 7 denotes as a whole a packer machine (only partially illustrated in Figure 5) that is designed to manufacture the packet 1 of cigarettes described above.

The packer machine 7 comprises a forming unit 8 in which the groups 4 of cigarettes are formed in succession, a folding unit 9 in which around each group 4 of cigarettes a corresponding wrapper 5 is folded to form an inner wrap 3, and a folding unit 10 (only partially illustrated) in which around each pair of inner wraps 3 a corresponding outer container 2 is formed.

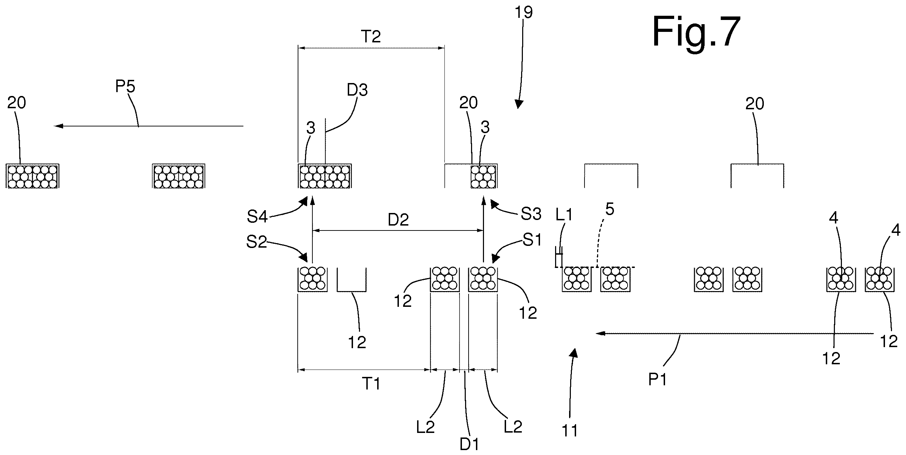

The forming unit 8 comprises a forming conveyor 11, which comprises a plurality of pockets 12 which are designed to house corresponding groups 4 of cigarettes and are step-fed (that is, with a law of motion which cyclically alternates a movement step and a rest step) along a forming path P1 that crosses the forming unit 8. The pockets 12 are grouped together in pairs, so that the two pockets 12 of the same pair of pockets 12 are close to each other whereas two successive pairs of pockets 12 are relatively far apart. As better illustrated in Figure 7, in the forming conveyor 11 two pockets 12 of the same pair of pockets 12 are spaced apart from one another by a distance D1 and two successive pairs of pockets 12 are spaced apart from one another by a pitch T1 (considerably) greater than the distance D1. As illustrated in Figure 5, the forming unit 8 comprises a hopper 13 provided with four outlet mouths for simultaneously feeding eight groups 4 of cigarettes to respective pairs of pockets 12 of the forming conveyor 11 which advances by step along the forming path P1; in particular, each outlet mouth of the hopper 13 feeds simultaneously two groups 4 of cigarettes to two pockets 12 of the same pair so as to form two separate groups 4 of cigarettes in a single extraction operation.

To the forming unit 8 a feeding device 14 is coupled, which feeds the wrappers 5 intended to be folded around the groups 4 of cigarettes to form the inner wraps 3. In the embodiment illustrated in the attached figures, the feeding device 14 couples the wrappers 5 to the groups 4 of cigarettes while the groups 4 of cigarettes are still carried by the pockets 12 of the forming conveyor 11; according to a different and perfectly equivalent embodiment not illustrated, the feeding device 14 couples the wrappers 5 to the groups 4 of cigarettes when the groups 4 of cigarettes protrude from the pockets 12 of the forming conveyor 11 to enter the folding unit 9.

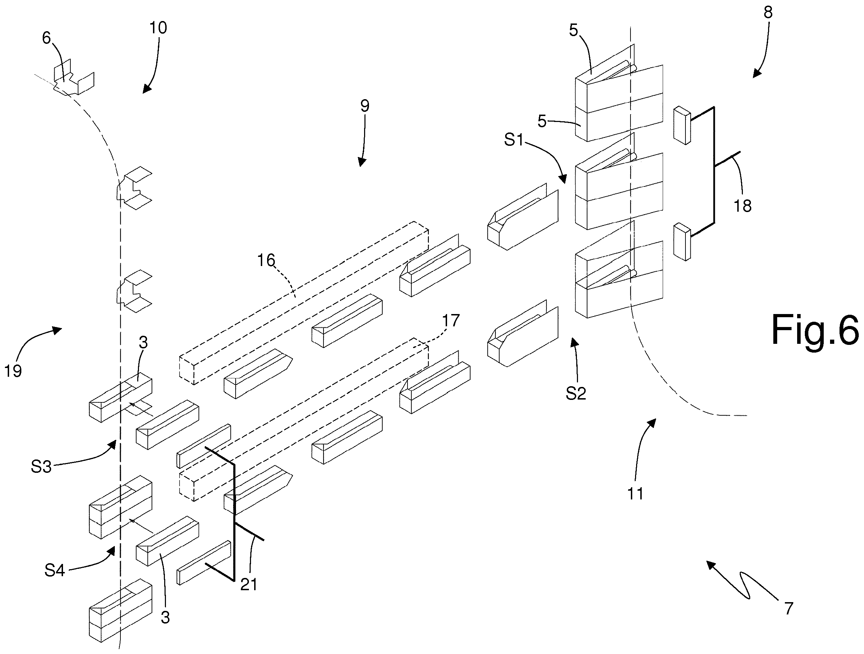

The feeding device 14 comprises a feeding conveyor 15, which feeds the wrappers 5 along a feeding path P2 that has a portion parallel to forming path P1 and has the same geometric arrangement of the pockets 12 of the forming the conveyor 11: consequently, the wrappers 5 in the feeding conveyor 15 are grouped together in pairs, so that the two wrappers 5 of the same pair of wrappers 5 are close to each other whereas two successive pairs of wrappers 5 are relatively far apart from one another. In particular, two wrappers 5 of the same pair of wrappers 5 are substantially in contact, whereas the two successive pairs of wrappers 5 are spaced apart from one another by the same pitch T1 existing between two successive pairs of pockets 12. It is important to note that, as clearly illustrated in Figure 6, the existing distance D1 between two pockets 12 of the same pair of pockets 12 is equal (at least) to twice the width L1 of the flap of the wrapper 5 which project outwards of the corresponding group 4 of cigarettes when the wrapper 5 is coupled to the group 4 of cigarettes; in this way, two wrappers 5 of the same pair of wrappers 5 can be arranged one beside the other without overlapping (and preferably, but not necessarily, substantially in mutual contact).

The folding unit 9 comprises two wrapping conveyors 16 and 17, which are arranged parallel and spaced apart from one another and receive in succession the groups 4 of cigarettes coupled to the corresponding wrappers 5 of the pockets 12 of the forming conveyor 11 in two transfer stations S1 and S2 distinct and separate from each other and step-feeds in succession (that is, with a law of motion which cyclically alternates a movement step and a rest step) the wraps 1 along respective folding paths P3 and P4 that are straight and are arranged perpendicular to the forming path P1. Along the forming conveyor 11 the groups 4 of cigarettes are fed transversely (i.e. the cigarettes are arranged perpendicular to the forming path P1), whereas along the wrapping conveyors 16 and 17 the groups 4 of cigarettes are fed longitudinally (i.e. the cigarettes are arranged parallel to the wrapping paths P3 and P4). The folding unit 9 comprises a number of folding devices of known types, which are coupled to the wrapping conveyors 16 and 17 and perform the folding of each wrapper 5 about the corresponding group 4 of cigarettes to form an inner wrap 3.

The two wrapping conveyors 16 and 17 (therefore the two transfer stations S1 and S2 and the two folding paths P3 and P4) are spaced apart from one another by a distance D2 (illustrated in figure 7) different from the pitch T1 existing between two successive pairs of pockets 12; in particular, the distance D2 between the two wrapping conveyors 16 and 17 (therefore between the two transfer stations S1 and S2 and between the two folding paths P3 and P4) is different from the pitch T1 existing between two successive pairs of pockets 12 by a quantity that is equal to the sum between the width L2 of a group 4 of cigarettes and the distance D1 existing between two pockets 12 of the same pair of pockets 12 (both illustrated in figure 7). In the embodiment illustrated in the attached figures, the distance D2 between the two wrapping conveyors 16 and 17 is greater than the pitch T1 existing between two successive pairs of pockets 12 and is equal to the sum between the pitch T1 existing between two successive pairs of pockets 12 and the width L2 of a group 4 of cigarettes added to the distance D1 existing between two pockets 12 of the same pair of pockets 12; according to a different and perfectly equivalent embodiment not illustrated, the distance D2 between the two wrapping conveyors 16 and 17 is lesser than the pitch T1 existing between two successive pairs of pockets 12 and is equal to the difference between the pitch T1 existing between two successive pairs of pockets 12 and the width L2 of a group 4 of cigarettes added to the distance D1 existing between two pockets 12 of the same pair of pockets 12. In this way, at each feeding step of the forming conveyor 11 a right pocket 12 of a first pair of pockets 12 of the forming conveyor 11 is in the transfer station S1 (i.e. facing and aligned with the wrapping conveyor 16) whereas a left pocket 12 of a second pair of pockets 12 of the forming conveyor 11 is in the transfer station S2 (i.e. facing and aligned with the wrapping conveyor 17). In other words, to the wrapping conveyor 16 all and only the groups 4 of cigarettes which are housed in the right pockets 12 of the pairs of pockets 12 of the forming conveyor 11 are fed whereas to the wrapping conveyor 17 all and only the groups 4 of cigarettes which are housed in the left pockets 12 of the pairs of pockets 12 of the forming conveyor 11 are fed. Consequently, each pair of pockets 12 of the forming conveyor 11 is not emptied of both groups 4 of cigarettes all at once, but is initially emptied of only the group 4 of cigarettes housed in the right pocket 12 at the transfer station S1 (i.e. towards the wrapping conveyor 16), and only later it is also emptied of the other group 4 of cigarettes housed in the left pocket 12 at the transfer station S2 (i.e. towards the wrapping conveyor 17).

At the transfer stations S1 and S2 a common pusher device 18 (i.e. transfer means) is provided, which has two twin pushers which, by acting (as described above) on two pockets 12 of two different pairs of pockets 12 push simultaneously and in synchronism two different groups 4 of cigarettes coupled to the corresponding wrappers 5 out of the forming conveyor 11 towards the corresponding wrapping conveyors 16 and 17.

The transverse folding unit 10 comprises a wrapping conveyor 19 (partially illustrated in Figure 5), which comprises a plurality of pockets 20 that are designed to house a pair of corresponding inner wraps 3 (i.e. groups 4 of cigarettes wrapped in wrappers 5) and are step-fed (that is, with a law of motion which cyclically alternates a movement step and a rest step) along a wrapping path P5. According to the embodiment illustrated in the accompanying figures, each pocket 20 of the wrapping conveyor 19 is designed to hold also a collar 6 which is inserted in the pocket 20 before the pair of inner wraps 3; according to alternative and completely equivalent embodiments not illustrated, each pocket 20 of the wrapping conveyor 19 is designed to hold only the pair of inner wraps 3 (i.e. the collar 6 is subsequently coupled to the pair of inner wraps 3) or each pocket 20 of the wrapping conveyor 19 is designed to hold both the collar 6, and a blank intended for forming the outer container 2.

Each pocket 20 of the wrapping conveyor 19 receives the two corresponding inner wraps 3 in two transfer stations S3 and S4 distinct and separate from each other and arranged at the end of the two wrapping conveyors 16 and 17; obviously, the two transfer stations S3 and S4 are spaced apart from one another by the same distance D2 existing between the two wrapping conveyors 16 and 17 (therefore between the two transfer stations S1 and S2 and between the two folding paths P3 and P4). As better illustrated in Figure 7, in the wrapping conveyor 19 the pockets 20 are equidistant from one another and are spaced apart from one another by a pitch T2 that is greater than the pitch T1 existing between two successive pairs of pockets 12 of the forming conveyor 11 and is preferably equal to the sum between the pitch T1 and the distance D1 between two pockets 12 of the same pair of pockets 12 (alternatively, the pitch T2 may be equal to the sum between the pitch T1, the distance D1 between two pockets 12 of the same pair of pockets 12, and double the width L2 of a group 4 of cigarettes). In this way, in each pocket 20 of the wrapping conveyor 19 the two corresponding inner wraps 3 are arranged one beside the other in substantial mutual contact (i.e. at a distance substantially zero from one another).

In other words, at each feeding step of the wrapping conveyor 19 a pocket 20 is in the transfer station S3 (i.e. facing and aligned with the wrapping conveyor 16) whereas another pocket 20 is in the transfer station S4 (i.e. facing and aligned with the wrapping conveyor 17); in the transfer station S3 the wrapping conveyor 16 is aligned with the right side of a pocket 20 of the wrapping conveyor 19 to feed a corresponding inner wrap 3 to the right of the pocket 20, whereas in the transfer station S4 the wrapping conveyor 17 is aligned with the left side of a pocket 20 of the wrapping conveyor 19 for feeding a corresponding inner wrap 3 to the left of the pocket 20. Therefore, when a pocket 20 of the wrapping conveyor 19 is in the transfer station S3, it receives an inner wrap 3 that is arranged to the right and when the same pocket 20 of the wrapping conveyor 19 is in the transfer station S4, it receives an inner wrap 3 that is arranged to the left; consequently, once having crossed both transfer stations S3 and S4 each pocket 20 of the wrapping conveyor 19 receives both the inner wraps 3 thus completing the formation of the content of the future packet 1 of cigarettes.

As illustrated in Figure 5, at the transfer stations S3 and S4 a common pusher device 21 is provided (i.e. transfer means), which has two twin pushers that by acting (as described above) on the two wrapping conveyors 16 and 17 push simultaneously and in synchronism two different inner wraps 3 towards two different pockets 20 of the wrapping conveyor 19.

In the embodiment illustrated in the attached figures, the inner wraps 3 enter the pockets 20 of the wrapping conveyor 19 by means of a transverse movement (i.e. a movement directed perpendicularly to the cigarettes, directed perpendicularly to the wrapping path P3 or P4, and directed perpendicularly to the wrapping path P5). According to a different and perfectly equivalent embodiment not illustrated, the inner wraps 3 enter the pockets 20 of the wrapping conveyor 19 by means of a longitudinal movement (i.e. a movement directed parallel to the cigarettes, directed parallel to the wrapping path P3 or P4, and directed perpendicular to the wrapping path P5).

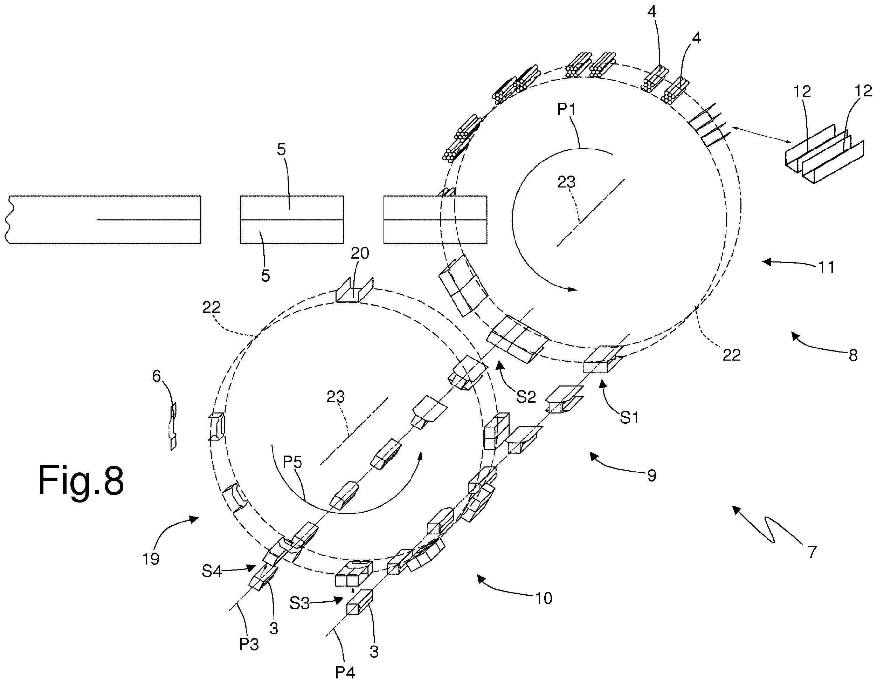

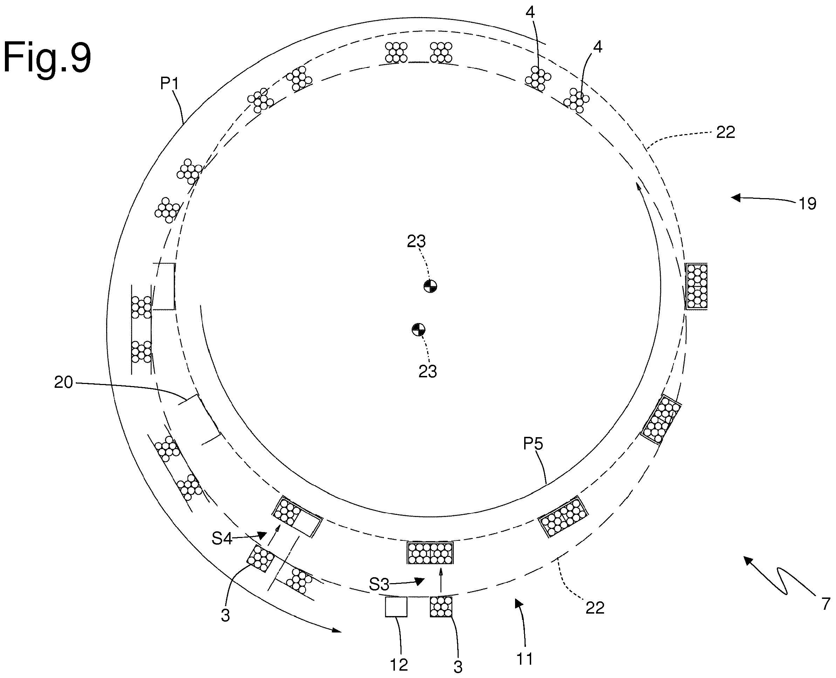

In the embodiment illustrated in Figures 5, 6 and 7, the forming conveyor 11 and the wrapping conveyor 19 are belt conveyors and each comprise a belt, which is wound around end pulleys (one of which is motorized), it supports the pockets 12 or 20 and moves by steps along an annular path of a polygonal shape. In the alternative embodiment illustrated in Figures 8 and 9, the forming conveyor 11 and the wrapping conveyor 19 are belt conveyors and each comprise a drum 22, which is rotary around a central rotation axis 23, supports the pockets 12 or 20 and step-feeds the pockets 12 or 20 along a circular path. In all the embodiments illustrated in the attached figures, the wrapping conveyors 16 and 17 are straight and each have pushers that feed the groups 4 of cigarettes through a fixed folding tunnel. In the embodiment illustrated in Figures 8 and 9, the differentiation between the pitch T1 of the pockets 12 in the forming conveyor 11 and the pitch T2 of the pockets 20 of the wrapping conveyor 19 can be obtained by maintaining the same angular pitch (i.e. the same number of pockets 12 and 20 distributed along the circumference), differentiating the diameter of the drums 22 and at the same time, arranging the two non-coaxial rotation axes 22 (that is, parallel to each other and lying at a certain distance one from the other). In the embodiment illustrated in Figures 7 and 8, the forming drum 22 of the conveyor 11 has a greater diameter than the drum 22 of the wrapping conveyor 19.

In the embodiments described above, in each pocket 20 of the wrapping conveyor 19 the two inner wraps 3 are in substantial mutual contact, i.e. are arranged at a distance D3 equal to zero from one another (illustrated in Figure 7); more generally, if in each pocket 20 of the wrapping conveyor 19 the two inner wraps 3 are arranged at a distance D3 other than zero from one another (for example in the case wherein the collar 6 has in the center a partition wall to separate the two inner wraps 3) the pitch T2 between the pockets 20 of the wrapping conveyor 19 is preferably equal to the sum between the pitch T1 and the difference between the distance D1 between two pockets 12 of the same pair of pockets 12 and the distance D3 between two inner wraps 3 within the same pocket 20 (alternatively, the pitch T2 may be equal to the sum between the pitch T1, the difference between the distance D1 between two pockets 12 of the same pair of pockets 12 and the distance D3, and double the width L2 of a group 4 of cigarettes).

It is important to note that each inner wrap 3 may be devoid of stabilization (i.e. the wrapper 5 has no connections between the overlapping portions and therefore must always be firmly held to avoid that the folds come apart due to elastic return), can be stabilized by means of glue, or it can be stabilized by heat-sealing (in this last case, the inner wrap 3 is normally tight-sealed). In the case of use of heat-sealing for stabilizing the inner wraps 3, the folding of the wrappers 5 and possibly the subsequent heat-sealing are fully manufactured in the folding unit 9, or, alternatively, the folding of the wrappers 5 and possibly the subsequent heat-sealing are manufactured in part in the forming unit 8 and in part in the folding unit 9.

The packer machine 7 described above has numerous advantages.

In the first place, in the packer machine 7 described above the inner wraps 3 enter into the corresponding pockets 20 of the wrapping conveyor 19 without any kind of mutual approaching movement thanks to the fact that in each pocket 20, the two corresponding inner wraps 3 enter in two different transfer stations S3 and S4 which have differentiated alignments with respect to the pocket 20; i.e. when a pocket 20 of the wrapping conveyor 19 is in the transfer station S3 it receives an inner wrap 3 which is arranged to the right and when the same pocket 20 of the wrapping conveyor 19 is in the transfer station S4 it receives an inner wrap 3 which is arranged to the left.

The absence of mutual approaching movement between the two inner wraps 3, intended to be provided to a same pocket 20 of the wrapping conveyor 19, allows to make easier and cheaper the part of the packer machine 7 designated to feed the inner wraps 3 to the wrapping conveyor 19.

Furthermore, the absence of mutual approaching movement between the two inner wraps 3, intended to be provided to a same pocket 20 of the wrapping conveyor 19, allows to substantially reduce the mechanical stress to which the inner wraps 3 are subject (and thus the cigarettes held in the inner wraps 3) to the advantage of the integrity of the cigarettes held in the inner wraps 3.

The embodiment illustrated in the accompanying figures refers to the manufacturing of a packet of cigarettes, but the present invention is also applicable without substantial changes to the manufacturing of any other type of packet of tobacco articles (for example, a packet of cigars, a packet of liquid vaporizing type electronic cigarettes, packet of new generation cigarettes without tobacco combustion...).

## Claims

1. A wrapping method to manufacture packets (1) of tobacco articles, each containing two distinct groups (4) of tobacco articles; the wrapping method comprises the steps of:
step-feeding, by means of a first conveyor (11) and along a first path (P1), a plurality of first pockets (12), which are designed to house corresponding groups (4) of tobacco articles;
transferring, in a first and in a second transfer station (S1, S2), two groups (4) of tobacco articles from corresponding first pockets (12) of the first conveyor (11) to a second and a third conveyor (16, 17), which each step-feed a corresponding group (4) of tobacco articles along a second and a third path (P3, P4) that are parallel one beside the other; and
transferring, in a third and in a fourth transfer station (S3, S4), two groups (4) of tobacco articles from the second and third conveyor (16, 17) to second pockets (20) of a fourth conveyor (19), which advances by step along a fourth path (P5); each second pocket (20) is designed to hold two groups (4) of tobacco articles arranged one beside the other;
wherein the first pockets (12) of the first conveyor (11) are grouped together in pairs, so that the two first pockets (12) of the same pair of first pockets (12) are spaced apart from one another by a first distance (D1) and two successive pairs of first pockets (12) are spaced apart from one another by a first pitch (T1) that is greater than the first distance (D1) ;
the wrapping method is **characterized in that**:
in the first transfer station (S1) a group (4) of tobacco articles is fed to the second conveyor (16), said group of tobacco articles being initially housed in a first right pocket (12) of a first pair of first pockets (12) of the first conveyor (11), and at the same time, in the second transfer station (S2) a group (4) of tobacco articles is fed to the third conveyor (17), said group (4) of tobacco articles being initially housed in a first left pocket (12) of a second pair of first pockets (12) of the first conveyor (11); and
in the third transfer station (S3) a group (4) of tobacco articles is fed from the second conveyor (16) to a second pocket (20) of the fourth conveyor (19), said group (4) of tobacco articles being placed on a right side of the second pocket (20), and, at the same time, in the fourth transfer station (S4) a group (4) of tobacco articles is fed from the third conveyor (17) to a different second pocket (20) of the fourth conveyor (19), said group (4) of tobacco articles being placed on a left side of the second pocket (20).

2. The wrapping method according to claim 1, wherein the second and the third conveyor (16, 17) are spaced apart by a second distance (D2), which is different from the first pitch (T1) existing between two successive pairs of first pockets (12), so that, with each feeding step of the first conveyor (11), a first right pocket (12) of a pair of first pockets (12) of the first conveyor (11) is in the first transfer station (S1) in order to face and be aligned with the second conveyor (16) whereas a first left pocket (12) of another pair of first pockets (12) of the first conveyor (11) is in the second transfer station (S2) in order to face and be aligned with the third conveyor (17).

3. The wrapping method according to claim 2, wherein the second distance (D2) is different from the first pitch (T1) existing between two successive pairs of first pockets (12) by a quantity that is equal to the sum between the width (L2) of a group (4) of tobacco articles and the first distance (D1) existing between two first pockets (12) of the same pair of first pockets (12).

4. The wrapping method according to claim 3, wherein the second distance (D2) is greater than the first pitch (T1) existing between two successive pairs of first pockets (12) and is equal to the sum between the first pitch (T1) and the width (L2) of a group (4) of tobacco articles added to the first distance (D1) existing between two first pockets (12) of the same pair of first pockets (12).

5. The wrapping method according to any of the claims from 1 to 4, wherein, with each feeding step, in the third transfer station (S3) the second conveyor (16) is aligned with the right side of a second pocket (20) of the fourth conveyor (19) so as to feed a corresponding group (4) of tobacco articles to the right of the second pocket (20) and, at the same time, in the fourth transfer station (S4) the third conveyor (17) is aligned with the left side of a different second pocket (20) of the fourth conveyor (19) so as to feed a corresponding group (4) of tobacco articles to the left of the second pocket (20).

6. The wrapping method according to any of the claims from 1 to 5, wherein the second pockets (20) of the fourth conveyor (19) are equidistant from one another and are spaced apart from one another by a second pitch (T2) that is greater than the first pitch (T1) existing between two successive pairs of first pockets (12) of the first conveyor (11).

7. The wrapping method according to claim 6, wherein the second pitch (T2) is at least equal to the sum between the first pitch (T1) and the difference between the first distance (D1) between two first pockets (12) of the same pair of first pockets (12) and the distance (D3) between two groups (4) of tobacco articles within the same second pocket (20) of the fourth conveyor (19).

8. The wrapping method according to any of the claims from 1 to 7 and comprising the further step of folding, along the second and the third conveyor (16, 17), a corresponding wrapper (5) around each group (4) of tobacco articles so as to wrap the group (4) of tobacco articles and create an inner wrap (3) that holds the group (4) of tobacco articles and is subsequently transferred to a second pocket (20) of the fourth conveyor (19).

9. The wrapping method according to claim 8 and comprising the further step of feeding the wrappers (5) along a fifth path (P2), which has a portion that is parallel to the first path (P1) and has the same geometric arrangement of the first pockets (12) of the first conveyor (11), so that the wrappers (5) are grouped together in pairs.

10. The wrapping method according to claim 9, wherein:
along the fifth path (P2), the two wrappers (5) of the same pair of wrappers (5) are substantially in contact with one another and two successive pairs of wrappers (5) are spaced apart from one another by the first pitch (T1) existing between two successive pairs of first pockets (12); and
the first distance (D1) existing between the first two pockets (12) of the same pair of first pockets (12) is at least equal to twice the width (L1) of the flap of the wrapper (5) that projects outwards from the corresponding group (4) of tobacco articles when the wrapper (5) is coupled to the group (4) of tobacco articles.

11. The wrapping method according to any of the claims from 1 to 10 and comprising the further step of feeding a collar (6) and/or a blank into each second pocket (20) of the fourth conveyor (19) upstream of the third and fourth transfer station (S3, S4).

12. The wrapping method according to any of the claims from 1 to 11, wherein the first conveyor (11) and the fourth conveyor (19) are belt conveyors and each comprise a belt, which is wound around end pulleys and supports the pockets (12; 20).

13. The wrapping method according to any of the claims from 1 to 11, wherein the first conveyor (11) and the fourth conveyor (19) are belt conveyors and each comprise a drum (22), which is rotary around a central rotation axis (23) and supports the pockets (12; 20).

14. The wrapping method according to claim 13, wherein the two drums (22) of the first conveyor (11) and of the fourth conveyor (19) have the same angular pitch, have different diameters, and have the rotation axes (23) that are parallel to one another and are arranged at a distance other than zero from one another.

15. The wrapping method according to any of the claims from 1 to 14, wherein the second and third conveyor (16, 17) are straight and each have pushers that feed the groups (4) of tobacco articles.

16. A packer machine (7) to manufacture packets (1) of tobacco articles, each containing two distinct groups (4) of tobacco articles; the packer machine (11) comprises:
a first conveyor (11) to feed along a first path (P1) a plurality of first pockets (12), which are designed to house corresponding groups (4) of tobacco articles;
a first and a second transfer station (S1, S2) to transfer two groups (4) of tobacco articles from corresponding first pockets (12) of the first conveyor (11) to a second and a third conveyor (16, 17), which each feed a corresponding group (4) of tobacco articles along a second and a third path (P3, P4) that are parallel one beside the other; and
a third and a fourth transfer station (S3, S4) to transfer two groups (4) of tobacco articles from the second and the third conveyor (16, 17) to second pockets (20) of a fourth conveyor (19), which advances along a fourth path (P5), wherein each second pocket (20) is designed to hold two groups (4) of tobacco articles arranged one beside the other;
wherein the first pockets (12) of the first conveyor (11) are grouped together in pairs, so that the two first pockets (12) of the same pair of first pockets (12) are spaced apart from one another by a first distance (D1) and two successive pairs of first pockets (12) are spaced apart from one another by a first pitch (T1) that is greater than the first distance (D1) ;
the packer machine (7) is **characterized in that**:
first transfer means are provided, which, in the first transfer station (S1), feed a group (4) of tobacco articles to the second conveyor (16), said group (4) of tobacco articles being initially housed in a first right pocket (12) of a first pair of first pockets (12) of the first conveyor (11), and, at the same time, in the second transfer station (S2), feed a group (4) of tobacco articles to the third conveyor (17), said group (4) of tobacco articles being initially housed in a first left pocket (12) of a second pair of first pockets (12) of the first conveyor (11); and
second transfer means are provided, which, in the third transfer station (S3), feed a group (4) of tobacco articles from the second conveyor (16) to a second pocket (20) of the fourth conveyor (19), said group (4) of tobacco articles being placed on a right side of the second pocket (20), and, at the same time, in the fourth transfer station (S4), feed a group (4) of tobacco articles from the third conveyor (17) to a different second pocket (20) of the fourth conveyor (19), said group (4) of tobacco articles being placed on a left side of the second pocket (20).

## Patentansprüche

1. Verpackungsverfahren zur Herstellung von Packungen (1) von Tabakartikeln, wobei jede zwei verschiedene Gruppen (4) von Tabakartikeln umfasst; wobei das Verpackungsverfahren die folgenden Schritte umfasst:
schrittweises Zuführen, mittels eines ersten Transportbandes (11) und entlang eines ersten Pfades (P1), einer Vielzahl erster Taschen (12), die ausgestaltet sind, entsprechende Gruppen (4) von Tabakartikeln aufzunehmen;
Überführen, in einer ersten und einer zweiten Transferstation (S1, S2), von zwei Gruppen (4) von Tabakartikeln aus den entsprechenden ersten Taschen (12) des ersten Transportbandes (11) an ein zweites und drittes Transportband (16, 17), wobei jedes eine entsprechende Gruppe (4) von Tabakartikeln entlang eines zweiten und dritten Pfades (P3, P4) zuführt, die parallel zueinander verlaufen; und
Überführen, in einer dritten und einer vierten Transferstation (S3, S4), von zwei Gruppen (4) von Tabakartikeln von dem zweiten und dritten Transportband (16, 17) an zweite Taschen (20) eines vierten Transportbandes (19), das sich schrittweise entlang eines vierten Pfades voran bewegt (P5); wobei jede zweite Tasche (20) ausgestaltet ist, zwei Gruppen (4) von Tabakartikeln aufzunehmen, die nebeneinander angeordnet sind;
wobei die ersten Taschen (12) des ersten Transportbandes (11) in Paaren gruppiert sind, sodass die ersten beiden Taschen (12) desselben Paares erster Taschen (12) durch eine erste Distanz (D1) auseinandergehalten werden und zwei aufeinanderfolgende Paare erster Taschen (12) von einem ersten Abstand (T1) auseinandergehalten werden, der größer als die erste Distanz (D1) ist;
wobei das Verpackungsverfahren **dadurch gekennzeichnet ist, dass**:
in der ersten Transferstation (S1) eine Gruppe (4) von Tabakartikeln auf das zweite Transportband (16) zugeführt wird, wobei die Gruppe von Tabakartikeln ursprünglich in einer ersten rechten Tasche (12) eines ersten Paares erster Taschen (12) des ersten Transportbandes (11) aufgenommen wurde, und gleichzeitig in der zweiten Transferstation (S2) eine Gruppe (4) von Tabakartikeln auf das dritte Transportband (17) zugeführt wird, wobei die Gruppe (4) von Tabakartikeln ursprünglich in einer ersten linken Tasche (12) eines zweiten Paares erster Taschen (12) des ersten Transportbandes (11) aufgenommen wurde; und
in der dritten Transferstation (S3) eine Gruppe (4) von Tabakartikeln vom zweiten Transportband (16) in eine zweite Tasche (20) des vierten Transportbandes (19) zugeführt wird, wobei die Gruppe (4) von Tabakartikeln auf einer rechten Seite der zweiten Tasche (20) platziert wird, und gleichzeitig in der vierten Transferstation (S4) eine Gruppe (4) von Tabakartikeln vom dritten Transportband (17) in eine andere zweite Tasche (20) des vierten Transportbandes (19) zugeführt wird, wobei die Gruppe (4) von Tabakartikeln auf einer linken Seite der zweiten Tasche (20) platziert wird.

2. Verpackungsverfahren nach Anspruch 1, wobei das zweite und dritte Transportband (16, 17) von einer zweiten Distanz (D2) auseinandergehalten werden, die sich vom ersten Abstand (T1) unterscheidet, der sich zwischen zwei aufeinanderfolgenden Paaren erster Taschen (12) befindet, sodass mit jedem Zuführschritt des ersten Transportbandes (11) sich eine erste rechte Tasche (12) eines Paares erster Taschen (12) des ersten Transportbandes (11) in der ersten Transferstation (S1) befindet, um auf das zweite Transportband (16) zu treffen und auf dieses ausgerichtet zu werden, während eine erste linke Tasche (12) eines anderen Paares erster Taschen (12) des ersten Transportbandes (11) sich in der zweiten Transferstation (S2) befindet, um auf das dritte Transportband (17) zu treffen und auf dieses ausgerichtet zu werden.

3. Verpackungsverfahren nach Anspruch 2, wobei die zweite Distanz (D2) sich vom ersten Abstand (T1), der sich zwischen zwei aufeinanderfolgenden Paaren erster Taschen (12) befindet, durch eine Menge unterscheidet, die der Summe der Breite (L2) einer Gruppe (4) von Tabakartikeln und der ersten Distanz (D1) entspricht, die sich zwischen zwei ersten Taschen (12) desselben Paares erster Taschen (12) befindet.

4. Verpackungsverfahren nach Anspruch 3, wobei die zweite Distanz (D2) größer als der erste Abstand (T1) ist, der sich zwischen zwei aufeinanderfolgenden Paaren erster Taschen (12) befindet, und der Summe des ersten Abstands (T1) und der Breite (L2) einer Gruppe (4) von Tabakartikeln entspricht, die zur ersten Distanz (D1) hinzugefügt wird, die sich zwischen zwei ersten Taschen (12) desselben Paares erster Taschen (12) befindet.

5. Verpackungsverfahren nach einem der vorhergehenden Ansprüche 1 bis 4, wobei bei jedem Zuführschritt in der dritten Transferstation (S3) das zweite Transportband (16) auf die rechte Seite einer zweiten Tasche (20) des vierten Transportbandes (19) ausgerichtet wird, um so die entsprechende Gruppe (4) von Tabakartikeln auf die rechte Seite der zweiten Tasche (20) zuzuführen, und gleichzeitig in der vierten Transferstation (S4) das dritte Transportband (17) auf die linke Seite einer anderen zweiten Tasche (20) des vierten Transportbandes (19) ausgerichtet wird, um so eine entsprechende Gruppe (4) von Tabakartikeln auf die linke Seite der zweiten Tasche (20) zuzuführen.

6. Verpackungsverfahren nach einem der vorhergehenden Ansprüche 1 bis 5, wobei die zweiten Taschen (20) des vierten Transportbandes (19) in gleichem Abstand zueinander sind und durch einen zweiten Abstand (T2) auseinandergehalten werden, der größer als der erste Abstand (T1) ist, der sich zwischen zwei aufeinanderfolgenden Paaren erster Taschen (12) des ersten Transportbandes (11) befindet.

7. Verpackungsverfahren nach Anspruch 6, wobei der zweite Abstand (T2) mindestens der Summe des ersten Abstands (T1) und dem Unterschied zwischen der ersten Distanz (D1) zwischen zwei ersten Taschen (12) desselben Paares erster Taschen (12) und der Distanz (D3) zwischen zwei Gruppen (4) von Tabakartikeln in der gleichen zweiten Tasche (20) des vierten Transportbandes (19) entspricht.

8. Verpackungsverfahren nach einem der vorhergehenden Ansprüche 1 bis 7, und umfassend die weiteren Schritte des Faltens einer entsprechenden Verpackung (5) um jede Gruppe (4) von Tabakartikeln entlang des zweiten und des dritten Transportbandes (16, 17), um die Gruppe (4) von Tabakartikeln zu verpacken und eine innere Verpackung (3) zu erstellen, die die Gruppe (4) von Tabakartikeln aufnimmt und die anschließend in eine zweite Tasche (20) des vierten Transportbandes (19) übertragen wird.

9. Verpackungsverfahren nach Anspruch 8 und umfassend den weiteren Schritt des Zuführens der Verpackungen (5) entlang eines fünften Pfades (P2), der einen Abschnitt aufweist, der parallel zum ersten Pfad (P1) verläuft und die gleiche geometrische Anordnung der ersten Taschen (12) des ersten Transportbandes (11) aufweist, sodass die Verpackungen (5) in Paaren gruppiert sind.

10. Verpackungsverfahren nach Anspruch 9, wobei:
entlang des fünften Pfades (P2) die beiden Verpackungen (5) des gleichen Paares von Verpackungen (5) wesentlich in Kontakt zueinander stehen und zwei aufeinanderfolgende Paare von Verpackungen (5) durch den ersten Abstand (T1) auseinander gehalten werden, der zwischen zwei aufeinanderfolgenden Paaren erster Taschen (12) besteht; und
die erste Distanz (D1), die zwischen den ersten beiden Taschen (12) desselben Paares erster Taschen (12) besteht, mindestens der doppelten Breite (L1) der Lasche der Verpackung (5) entspricht, die von der entsprechenden Gruppe (4) von Tabakartikeln nach außen ragt, wenn die Verpackung (5) mit der Gruppe (4) von Tabakartikeln gekoppelt wird.

11. Verpackungsverfahren nach einem der vorhergehenden Ansprüche 1 bis 10 und umfassend den weiteren Schritt des Zuführens eines Kragens (6) und/oder eines Zuschnitts in jede zweite Tasche (20) des vierten Transportbandes (19), das der dritten und vierten Transferstation (S3, S4) vorgeschaltet ist.

12. Verpackungsverfahren nach einem der vorhergehenden Ansprüche 1 bis 11, wobei das erste Transportband (11) und das vierte Transportband (19) Förderbänder sind und jedes einen Gurt umfasst, der um die Endscheiben gewickelt ist und die Taschen (12; 20) trägt.

13. Verpackungsverfahren nach einem der vorhergehenden Ansprüche 1 bis 11, wobei das erste Transportband (11) und das vierte Transportband (19) Förderbänder sind und jedes eine Trommel (22) umfasst, die drehbar um eine zentrale Rotationsachse ist (23) und die Taschen (12; 20) trägt.

14. Verpackungsverfahren nach Anspruch 13, wobei die beiden Trommeln (22) des ersten Transportbandes (11) und des vierten Transportbandes (19) denselben Teilungswinkel aufweisen, unterschiedliche Durchmesser aufweisen und Rotationsachsen (23) aufweisen, die parallel zueinander verlaufen und mit einer Distanz verschieden von Null zueinander angeordnet sind.

15. Verpackungsverfahren nach einem der vorhergehenden Ansprüche 1 bis 14, wobei das zweite und dritte Transportband (16, 17) geradlinig sind und jedes Schieber aufweist, die die Gruppen (4) von Tabakartikeln zuführen.

16. Verpackungsmaschine (7) zur Herstellung von Paketen (1) von Tabakartikeln, wobei jedes zwei verschiedene Gruppen (4) von Tabakartikeln umfasst; wobei die Verpackungsmaschine (7) Folgendes umfasst:
ein erstes Transportband (11) zum Zuführen entlang eines ersten Pfades (P1) einer Vielzahl erster Taschen (12), die ausgestaltet sind, entsprechende Gruppen (4) von Tabakartikeln aufzunehmen;
eine erste und eine zweite Transferstation (S1, S2) zum Übertragen von zwei Gruppen (4) von Tabakartikeln aus entsprechenden ersten Taschen (12) des ersten Transportbandes (11) an ein zweites und ein drittes Transportband (16, 17), die beide eine entsprechende Gruppe (4) von Tabakartikeln entlang eines zweiten und eines dritten Pfades (P3, P4) zuführen, die parallel nebeneinander verlaufen; und
eine dritte und eine vierte Transferstation (S3, S4) zum Übertragen von zwei Gruppen (4) von Tabakartikeln des zweiten und des dritten Transportbandes (16, 17) an zweite Taschen (20) eines vierten Transportbandes (19), das sich entlang eines vierten Pfades voran bewegt (P5), wobei jede zweite Tasche (20) ausgestaltet ist, zwei Gruppen (4) von Tabakartikeln aufzunehmen, die nebeneinander angeordnet sind;
wobei die ersten Taschen (12) des ersten Transportbandes (11) in Paaren gruppiert sind, sodass die ersten beiden Taschen (12) desselben Paares erster Taschen (12) durch eine erste Distanz (D1) auseinandergehalten werden und zwei aufeinanderfolgende Paare erster Taschen (12) von einem ersten Abstand (T1) auseinandergehalten werden, der größer als die erste Distanz (D1) ist;
wobei die Verpackungsmaschine (7) **dadurch gekennzeichnet ist, dass**:
erste Übertragungsmittel bereitgestellt sind, die in der ersten Transferstation (S1) eine Gruppe (4) von Tabakartikeln auf das zweite Transportband (16) zuführen, wobei die Gruppe (4) von Tabakartikeln ursprünglich in einer ersten rechten Tasche (12) eines ersten Paares der ersten Taschen (12) des ersten Transportbandes (11) aufgenommen wurde, und die gleichzeitig in der zweiten Transferstation (S2) eine Gruppe (4) von Tabakartikeln auf das dritte Transportband (17) zuführen, wobei die Gruppe (4) von Tabakartikeln ursprünglich in einer ersten linken Tasche (12) eines zweiten Paares erster Taschen (12) des ersten Transportbandes (11) aufgenommen wurde; und
zweite Übertragungsmittel bereitgestellt werden, die in der dritten Transferstation (S3) eine Gruppe (4) von Tabakartikeln vom zweiten Transportband (16) in eine zweite Tasche (20) des vierten Transportbandes (19) zuführen, wobei die Gruppe (4) von Tabakartikeln auf einer rechten Seite der zweiten Tasche (20) platziert ist, und die gleichzeitig in der vierten Transferstation (S4) eine Gruppe (4) von Tabakartikeln vom dritten Transportband (17) in eine unterschiedliche zweite Tasche (20) des vierten Transportbandes (19) zuführen, wobei die Gruppe (4) von Tabakartikeln auf einer linken Seite der zweiten Tasche (20) platziert ist.

## Revendications

1. Procédé d'emballage pour fabriquer des paquets (1) d'articles de tabac, chacun contenant deux groupes distincts (4) d'articles de tabac ; le procédé d'emballage comprend les étapes suivantes :
alimenter pas à pas, au moyen d'un premier transporteur (11) et le long d'une première trajectoire (P1), une pluralité de premières poches (12) qui sont conçues pour recevoir des groupes (4) correspondants d'articles de tabac ;
transférer, dans une première et dans une seconde station de transfert (S1, S2), deux groupes (4) d'articles de tabac depuis des premières poches (12) correspondantes du premier transporteur (11) à un deuxième et un troisième transporteur (16, 17), qui font avancer chacun, par pas, un groupe (4) correspondant d'articles de tabac le long d'une deuxième et d'une troisième trajectoire (P3, P4) qui sont parallèles l'une à côté de l'autre ; et
transférer, dans une troisième et dans une quatrième station de transfert (S3, S4), deux groupes (4) d'articles de tabac depuis les deuxième et troisième transporteurs (16, 17) à des secondes poches (20) d'un quatrième transporteur (19), qui avance par pas le long d'une quatrième trajectoire (P5) ; chaque seconde poche (20) est conçue pour maintenir deux groupes (4) d'articles de tabac agencés l'un à côté de l'autre ;
dans lequel les premières poches (12) du premier transporteur (11) sont groupées par paires, de sorte que les deux premières poches (12) de la même paire de premières poches (12) sont éloignées l'une de l'autre par une première distance (D1) et deux paires successives de premières poches (12) sont éloignées l'une de l'autre par un premier écartement (T1) qui est supérieur à la première distance (D1) ;
le procédé d'emballage est **caractérisé en ce que** :
dans la première station de transfert (S1), un groupe (4) d'articles de tabac est approvisionné au deuxième transporteur (16), ledit groupe d'articles de tabac étant initialement logé dans une première poche droite (12) d'une première paire de premières poches (12) du premier transporteur (11), et en même temps, dans la deuxième station de transfert (S2), un groupe (4) d'articles de tabac est approvisionné au troisième transporteur (17), ledit groupe (4) d'articles de tabac étant initialement logé dans une première poche gauche (12) d'une seconde paire de premières poches (12) du premier transporteur (11) ; et
dans la troisième station de transfert (S3), un groupe (4) d'articles de tabac est approvisionné depuis le deuxième transporteur (16) à une seconde poche (20) du quatrième transporteur (19), ledit groupe (4) d'articles de tabac étant placé sur un côté droit de la seconde poche (20) et en même temps, dans la quatrième station de transfert (S4), un groupe (4) d'articles de tabac est approvisionné depuis le troisième transporteur (17) à une seconde poche (20) différente du quatrième transporteur (19), ledit groupe (4) d'articles de tabac étant placé sur un côté gauche de la seconde poche (20).

2. Procédé d'emballage selon la revendication 1, dans lequel le deuxième et le troisième transporteur (16, 17) sont éloignés par une seconde distance (D2) qui est différente du premier écartement (T1) existant entre deux paires successives de premières poches (12), de sorte que, avec chaque étape d'alimentation du premier transporteur (11), une première poche droite (12) d'une paire de premières poches (12) du premier transporteur (11) est dans la première station de transfert (S1) afin de faire face à et d'être alignée avec le deuxième transporteur (16), alors qu'une première poche gauche (12) d'une autre paire de premières poches (12) du premier transporteur (11) est dans la deuxième station de transfert (S2) afin de faire face à et d'être alignée avec le troisième transporteur (17).

3. Procédé d'emballage selon la revendication 2, dans lequel la seconde distance (D2) est différente du premier écartement (T1) existant entre deux paires successives de premières poches (12) selon une quantité qui est égale à la somme entre la largeur (L2) d'un groupe (4) d'articles de tabac et la première distance (D1) existant entre deux premières poches (12) de la même paire de premières poches (12).

4. Procédé d'emballage selon la revendication 3, dans lequel la seconde distance (D2) est supérieure au premier écartement (T1) existant entre deux paires successives de premières poches (12) et est égale à la somme entre le premier écartement (T1) et la largeur (L2) d'un groupe (4) d'articles de tabac ajoutée à la première distance (D1) existant entre les deux premières poches (12) de la même paire de premières poches (12).

5. Procédé d'emballage selon l'une quelconque des revendication 1 à 4, dans lequel, avec chaque étape d'alimentation, dans la troisième station de transfert (S3), le deuxième transporteur (16) est aligné avec le côté droit d'une seconde poche (20) du quatrième transporteur (19) afin d'amener un groupe (4) correspondant d'articles de tabac à droite de la seconde poche (20), et en même temps, dans la quatrième station de transfert (S4), le troisième transporteur (17) est aligné avec le côté gauche d'une seconde poche (20) différente du quatrième transporteur (19) afin d'amener un groupe (4) correspondant d'articles de tabac à gauche de la seconde poche (20).

6. Procédé d'emballage selon l'une quelconque des revendications 1 à 5, dans lequel les secondes poches (20) du quatrième transporteur (19) sont à équidistance l'une de l'autre et sont éloignées l'une de l'autre par un second écartement (T2) qui est supérieur au premier écartement (T1) existant entre deux paires successives de premières poches (12) du premier transporteur (11).

7. Procédé d'emballage selon la revendication 6, dans lequel le second écartement (T2) est au moins égal à la somme entre le premier écartement (T1) et la différence entre la première distance (D1) entre deux premières poches (12) de la même paire de premières poches (12) et la distance (D3) entre deux groupes (4) d'articles de tabac dans la même seconde poche (20) du quatrième transporteur (19).

8. Procédé d'emballage selon l'une quelconque des revendications 1 à 7, et comprenant l'étape supplémentaire de pliage, le long du deuxième et du troisième transporteur (16, 17), d'une feuille d'emballage (5) autour de chaque groupe (4) d'articles de tabac afin d'emballer le groupe (4) d'articles de tabac et de créer un emballage interne (3) qui maintient le groupe (4) d'articles de tabac et est ensuite transféré à une seconde poche (20) du quatrième transporteur (19).

9. Procédé d'emballage selon la revendication 8 et comprenant l'étape supplémentaire de faire avancer les feuilles d'emballage (5) le long d'une cinquième trajectoire (P2), qui a une partie qui est parallèle à la première trajectoire (P1) et a le même agencement géométrique des premières poches (12) du premier transporteur (11), de sorte que les feuilles d'emballage (5) sont groupées ensemble par paires.

10. Procédé d'emballage selon la revendication 9, dans lequel :
le long de la cinquième trajectoire (P2), les deux feuilles d'emballage (5) de la même paire de feuilles d'emballage (5) sont sensiblement en contact l'une avec l'autre et deux paires successives de feuilles d'emballage (5) sont éloignées l'une de l'autre par le premier écartement (T1) existant entre deux paires successives de premières poches (12) ; et
la première distance (D1) existant entre les deux premières poches (12) de la même paire de premières poches (12) est au moins égale à deux fois la largeur (L1) du rabat de la feuille d'emballage (5) qui fait saillie vers l'extérieur à partir du groupe (4) correspondant d'articles de tabac lorsque la feuille d'emballage (5) est couplée au groupe (4) d'articles de tabac.

11. Procédé d'emballage selon l'une quelconque des revendications 1 à 10 et comprenant l'étape supplémentaire d'alimentation d'un collier (6) et/ou une découpe dans chaque seconde poche (20) du quatrième transporteur (19) en amont des troisième et quatrième stations de transfert (S3, S4).

12. Procédé d'emballage selon l'une quelconque des revendications 1 à 11, dans lequel le premier transporteur (11) et le quatrième transporteur (19) sont des courroies transporteuses et comprennent chacune une courroie, qui est enroulée autour de poulies d'extrémité et supporte les poches (12 ; 20).

13. Procédé d'emballage selon l'une quelconque des revendications 1 à 11, dans lequel le premier transporteur (11) et le quatrième transporteur (19) sont des courroies transporteuses et comprennent chacune un tambour (22) qui peut tourner autour d'un axe de rotation central (23) et supporte les poches (12 ; 20).

14. Procédé d'emballage selon la revendication 13, dans lequel les deux tambours (22) du premier transporteur (11) et du quatrième transporteur (19) ont le même écartement angulaire, ont des diamètres différents et ont les axes de rotation (23) qui sont parallèles entre eux et sont agencés à une distance différente de zéro, l'un par rapport à l'autre.

15. Procédé d'emballage selon l'une quelconque des revendications 1 à 14, dans lequel les deuxième et troisième transporteurs (16, 17) sont droits et ont chacun des poussoirs qui font avancer les groupes (4) d'articles de tabac.

16. Machine d'emballage (7) pour fabriquer des paquets (1) d'articles de tabac, chacun contenant deux groupes (4) distincts d'articles de tabac ; la machine d'emballage (11) comprend :
un premier transporteur (11) pour faire avancer, le long d'une première trajectoire (P1), une pluralité de premières poches (12), qui sont conçues pour loger des groupes (4) correspondants d'articles de tabac ;
une première et une deuxième station de transfert (S1, S2) pour transférer deux groupes (4) d'articles de tabac des premières poches (12) correspondantes du premier transporteur (11) à un deuxième et un troisième transporteur (16, 17), qui font chacun avancer un groupe (4) correspondant d'articles de tabac le long d'une deuxième et d'une troisième trajectoire (P3, P4) qui sont parallèles l'une à côté de l'autre ; et
une troisième et une quatrième station de transfert (S3, S4) pour transférer deux groupes (4) d'articles de tabac du deuxième et du troisième transporteur (16, 17) aux secondes poches (20) d'un quatrième transporteur (19), qui avance le long d'une quatrième trajectoire (P5), dans laquelle chaque seconde poche (20) est conçue pour maintenir deux groupes (4) d'articles de tabac agencés l'un à côté de l'autre ;
dans laquelle les premières poches (12) du premier transporteur (11) sont groupées ensemble par paires, de sorte que les deux premières poches (12) de la même paire de premières poches (12) sont éloignées l'une de l'autre par une première distance (D1) et deux paires successives de premières poches (12) sont éloignées l'une de l'autre par un premier écartement (T1) qui est supérieur à la première distance (D1) ;
la machine d'emballage (7) est **caractérisée en ce que** :
des premiers moyens de transfert qui sont fournis, dans la première station de transfert (S1), font avancer un groupe (4) d'articles de tabac vers le deuxième transporteur (16), ledit groupe (4) d'articles de tabac étant initialement logé dans une première poche droite (12) d'une première paire de premières poches (12) du premier transporteur (11) et en même temps, dans la deuxième station de transfert (S2), font avancer un groupe (4) d'articles de tabac vers le troisième transporteur (17), ledit groupe (4) d'articles de tabac étant initialement logé dans une première poche gauche (12) d'une seconde paire de premières poches (12) du premier transporteur (11) ; et
des seconds moyens de transfert qui sont fournis, dans la troisième station de transfert (S3), font avancer un groupe (4) d'articles de tabac du deuxième transporteur (16) à une seconde poche (20) du quatrième transporteur (19), ledit groupe (4) d'articles de tabac étant placé sur un côté droit de la seconde poche (20) et en même temps, dans la quatrième station de transfert (S4), font avancer un groupe (4) d'articles de tabac du troisième transporteur (17) à une seconde poche (20) différente du quatrième transporteur (19), ledit groupe (4) d'articles de tabac étant placé du côté gauche de la seconde poche (20).
